# EUROPEAN PATENT APPLICATION

(11) **EP 4 002 065 A1**
(43) Date of publication of application: **25.05.2022**
(21) Application number: 20383025.2
(22) Date of filing: 24.11.2020
(51) Int. Cl.: G06F 3/01

(54) **DEVICES AND METHODS FOR TOUCHLESS ACTUATION OF ELECTRIC LOADS**

(71) Applicant: Simon, S.A.U., 08013 Barcelona (ES)
(72) Inventor: Molinero Lozano, Alberto, 08013 Barcelona (ES); Gragera Gil, Miguel, 08013 Barcelona (ES)
(74) Representative: Balder IP Law, S.L.

(57) **Abstract**

A device for actuating an electric load, comprising: an antenna; a radiofrequency (RF) communications module electrically coupled with the antenna; at least one processor electrically coupled with the RF communications module; and a directional coupler at least via which the RF communications module is coupled with the antenna; the at least one processor and the RF communications module are both configured to provide electrical signals for radiation to the antenna, the electrical signals for radiation comprising both data and pulse signals; the at least one processor is further configured to at least determine whether a user is proximate to the antenna by processing part of the electrical signals for radiation that are not radiated by the antenna and are reflected to the directional coupler, and further configured to provide a command for actuation of at least one electric load based on the determination made. Also, a system comprising one or more said devices, and a method for actuating at least one electric load.

## Description

### TECHNICAL FIELD

The present invention relates to touchless actuation of electric loads. More particularly, the present invention relates to devices, systems and methods whereby a user can operate one or more electric loads, namely devices like, for instance, luminaires, without touching any switch or surface.

### STATE OF THE ART

One important part in the use of appliances or devices is how to control the operation thereof, for example, turning them on and off, or adjusting the way the devices function.

Both comfortability in the use of appliances or devices and ease in the actuation thereof has always been one of the main drivers in the innovation of electrical devices. Developments in this line of work have thus made daily tasks simpler as the associated devices for control of the appliances have been constantly evolving to include new functionalities, including the human-to-machine interfacing.

Further, these features not only improve the comfortability when it comes to the use of the appliances or devices. The increasing hygiene requirements in all activities for preventing the spread of contagious diseases also demand the adoption of ways of interacting with devices that reduce physical contact between an user and the device.

US7531921 B2 describes a non-contact multi-function electrical switch for the control of an electrical device, the switch including sensor means for detecting presence of hands of a user in front of the sensor means and actuate the electrical device accordingly. US2005236906A1 discloses an electronic switch or intensity controller for a light that detects changes in capacitance or infrared radiation in a detection field of a sensor, thereby detecting presence of a user in order to control the light.

The possibility of controlling an appliance in a touchless manner is deemed to be convenient, notwithstanding prior art controlling devices are provided with sensor means for touchless actuation of the appliances or devices. The addition of sensor means is, however, inconvenient because it is an additional component to be fitted within the device, thereby increasing both its cost and size, and is also affected by antennas that the device may have.

For example, US10044095B2 describes a wireless transmission system with power control to meet SAR regulations based upon the detection of users proximate to the system; the system includes a proximity sensor and an insulator for fitting the proximity sensor. US9144051 B2 describes a radiofrequency device whose radiation power is controlled, for SAR compliance, in accordance with measurements of a capacitance measurement device of a directional coupler upon radiation of the waves whose power is to be controlled. The proximity detection either cannot be controlled or requires isolation from the radiation that is to control.

There is an interest in providing devices and methods for touchless control of electric loads that do not require sensor means whose operation can be affected by an antenna, and there is likewise the interest of having increased control in the proximity detection for more reliable and precise actuation of electric loads. Preferably, the manufacturing of the devices should be simple and cost-effective since multiple devices are usually arranged in facilities for the actuation of electric loads.

### DESCRIPTION OF THE INVENTION

A first aspect of the invention relates to a device for actuating an electric load, comprising: an antenna; a radiofrequency (RF) communications module electrically coupled with the antenna; at least one processor electrically coupled with the RF communications module; and a directional coupler at least via which the RF communications module is coupled with the antenna; the at least one processor is configured to provide electrical signals with data; the at least one processor and the RF communications module are both configured to provide electrical signals for radiation to the antenna, the electrical signals for radiation comprising both the data and pulse signals; the at least one processor is further configured to at least determine whether a user is proximate to the antenna by processing part of the electrical signals for radiation that are not radiated by the antenna and are reflected to the directional coupler, and further configured to provide a command for actuation of at least one electric load based on the determination made.

The device enables the actuation of an electric load, that is, the control of the operation of the electric load in a touchless manner. A user in front of the antenna, for example by placing her/his hand in front of the antenna, alters the behavior of the antenna. In this sense, the mismatch of the antenna due to the proximate presence of the user -e.g. in the order of centimeters, for example 15 centimeters or less, preferably 5 centimeters or less- results in the non-radiation of part of the electrical signals -or, as will be described later on, results in the radiation of a greater part of the electrical signals-, which include pulse signals -electrical signals with a repeating pulse-, due to the mismatch in the antenna. Hence, the non-radiated part reflects from the antenna to the directional coupler, which in turn extracts it through a port different from an input port through which the electrical signals for radiation are provided to the antenna. Accordingly, the at least one processor determines whether a user is proximate by processing the part of the electrical signals reflected to the directional coupler and which are due to the proximity of the user.

The electrical signals for radiation are for active data communications. They thus include data to be transmitted to one or more apparatuses remote from the device that are communicatively coupled with the device, for example to a mobile phone, a computer, an appliance with RF connectivity, an industrial machine with RF connectivity, or any other electronic device with RF connectivity. By way of example, the data may comprise status information of the device or a system comprising the device, commands for controlling operation of the apparatus(es) like in home, machine or manufacturing plant automation, data streaming, etc. This means that the device has active data communications onto which a pulse signal is to be included for detecting whether an electric load is to be actuated by a user.

Therefore, the electric signals for radiation are generated by combining data to be transmitted and pulse signals. The at least one processor commands the RF communications module to produce the electrical signals for radiation, which include the data and the pulses of the pulse signals. Each electrical signal that is to be provided to the antenna for radiation includes the data and the pulses such that the pulses are included between some pairs -or all pairs- of frames of the data. Hence, the pulses do not overlap the data frames, thereby not including a signal directly on the data frames that might affect the correct demodulation thereof. As it will be apparent from the present disclosure, the number of pulses to be included per second may be selected depending upon the expected perturbances of the environment that may affect the antenna, thus for a larger number of expected perturbances more pulses are preferred; likewise, additionally or alternatively, the number of pulses to be included per second may be selected depending upon a precision over time with which the device is to determine whether a user is proximate to the antenna, thus for a greater precision more pulses are preferred. The RF communications module provides the resulting electrical signal to the directional coupler, which in turn provides it to the antenna for radiation.

The part of electrical signals that is not radiated and is, thus, reflected back to the directional coupler, is provided to the at least one processor. A converting device, e.g. an analog-to-digital converter, operational amplifiers configured for digitization, etc. digitizes the electrical signal at the directional coupler, and the at least one processor receives the samples of the digitized electrical signal. Then, by processing the pulse signals within the part of the electrical signals in the directional coupler and taking into account the expected pulse signals when there is no detuning -or there is no tuning- of the antenna due to the close presence of a user, the at least one processor establishes whether part of the mismatch in the antenna is due to the presence of somebody -or something- in the proximity thereof; a baseline mismatch and threshold values may be determined when there is no user or object in the proximity of the antenna, thereby resulting in the impedance mismatch in these conditions and the pulse signals are radiated depending on said impedance mismatch. It is noted that the impedance mismatch includes the impedance mismatch at the frequency of radiation of the electromagnetic waves or the average impedance mismatch in a frequency bandwidth comprising said frequency of radiation. Based on, for example, the amplitude or magnitude of the pulse signals in the electrical signals in the directional coupler it establishes whether there is somebody -or something- in the proximity of the antenna and, thus, whether it is to provide a command for actuation of an electric load or not.

In the context of the present disclosure, an electric load is an electric device capable of performing a task by emitting or receiving electromagnetic waves at one or more frequencies and/or by producing a mechanical effect like e.g. movement of a physical element by means of a motor, a sound, etc.

In some embodiments, the at least one processor processes the part of the electrical signals not radiated and reflected to obtain a voltage standing wave ratio -i.e. VSWR-, a return loss and/or a reflection coefficient at least for determining whether a user is proximate to the antenna.

The impedance mismatch of the antenna owing to the presence of person or object in the proximity of the antenna can be measured by way of any one of these parameters. By processing one or more of said parameters, the at least one processor establishes whether there is a user or object proximate to the antenna since the presence thereof will produce -or either increase or decrease- an impedance mismatch. Based on the characteristics of the parameter obtained, e.g. amplitude or magnitude, time difference with respect to the pulse signal to be radiated, etc., the at least one processor determines the presence or not of said person or object.

The aforesaid parameters can be obtained by processing the electrical signal at the output port of a rectifier circuit connected to or part of the directional coupler. Particularly, the rectifier circuit is arranged at the port through which the part of the electrical signals is extracted and provided to the at least one processor.

In some embodiments, the at least one processor processes a plurality of samples of the part of the electrical signals not radiated and reflected to determine whether both a user is proximate to the antenna and a gesture for actuation was made by the user.

The plurality of samples corresponds to the digitization of at least a portion of part of the electrical signals not radiated -i.e. reflected to the directional coupler-. The samples can be, but not necessarily have to be, consecutive samples output by the converting device. For example, it may be preferable not to provide all the samples within a time window when the sampling rate of the converting device is high to avoid unnecessary processing of samples by the at least one processor, and which usually do not provide much information considering the usual movement speeds of hands of users. In this sense, it may suffice that at least one sample per pulse is provided for processing by the at least one processor even though it is not necessary to provide a sample for each pulse. Therefore, by way of example, pluralities of samples comprising more than 1 sample per second and fewer than 300 samples -and, preferably, fewer than 100 samples- per second may be preferred so as to reduce the computational burden of the processor and, thus, energy consumption.

Further, by processing multiple samples, the time evolution of the pulse signals, for example in the form of VSWR, return loss or reflection coefficient, can be attained. Said time evolution is not only indicative of the proximity of the user or object over time, but it can also be indicative of gestures made by the user, for instance to trigger different actuations commands.

In some embodiments, the at least one processor is further configured to not provide a command for actuation when it determines that no gesture for actuation was made by the user.

The at least one processor determines, based on the part of the electrical signals not radiated and reflected to the directional coupler, whether a user is simply proximate to the antenna or whether she/he is attempting to operate the electric load by way of a gesture. In this way, accidental operation of the electric load due to the user passing in front of the antenna may be avoided.

In some embodiments, the pulse signals of the electrical signals for radiation include pulses at a predetermined frequency.

The pulses of the pulse signals, which combine with the data to be radiated, are provided at regular intervals so that actuation of the electric load can be instantaneous or almost instantaneous when a user -or object- gets proximate to the antenna. This not only improves the response time of the device when it comes to the actuation of the electric load, but also provides a good human-to-machine interaction whereby the user knows quickly whether the device works and that her/his actuation on the electric load has been identified by the device.

When the pulse signals are provided sporadically and unevenly over time, there may be occasions where the actuation by the user does not result in the actuation of the electric load, thereby leaving the user confused. Such situation may also lead the user to get closer to the device because she/he might consider that the detection range is shorter, or that touching is necessary, therefore the user might even get to touch the device in expectation of actuating the load in this manner. In this sense, the predetermined frequency is preferably equal to or greater than 1 Hz, and is more preferably equal to or greater than one or more of: 10 Hz, 20 Hz and 50 Hz. Preferably the predetermined frequency is also not greater than 300 Hz, and/or than 100 Hz, since that increases the energy consumption with no improved detection considering the velocities with which a user usually moves her/his hands or arms.

In some embodiments, the antenna and the RF communications module are both configured such that the part of the electrical signals not radiated and reflected is indicative of a user being proximate to the antenna when the user is at a distance not greater than 5 centimeters from the antenna.

The electronics and circuity involved -e.g. matching networks- in the radiation of electromagnetic waves, including the antenna and the communications module, are configured in such a way that the part of the electrical signals reflected to the directional coupler has a magnitude such that, once processed by the at least one processor, cannot reveal whether a user is at a distance beyond 5 cm from the antenna, thereby not actuating the electric load in such cases. Or, in other words, for mismatches of the antenna when the user is at a distance greater than 5 centimeters, the magnitude of the part of the electrical signals reflected to the directional coupler is low enough to not be differentiable from a baseline part of electrical signal reflected to the directional coupler when the user is at a distance of e.g. 1 meter, 5 meters, etc.; the mismatch in this latter cases is the one that the antenna features with no external disturbances.

This reduces the number of false positives, i.e. determination that users are proximate when the user did not intend to actuate the load. This is so because users passing by at distances greater than 5 centimeters are not detected. It also reduces the energy consumption of the device due to lower radiating powers.

In some embodiments, the at least one processor is further configured to not provide a command for actuation when the part of the electrical signals not radiated is indicative of a user being at a distance from the antenna that is equal to or less than a predetermined distance. In some of these embodiments, the predetermined distance is 0,5 cm or 1 cm.

A minimum distance can be advantageous to make the user get used to not touching the device for actuating the electric load.

In some embodiments, the device is configured such that an impedance mismatch of the antenna increases when the user is proximate to the antenna. In some of these embodiments, the impedance mismatch is between 10% and 30%, preferably between 10% and 20%, and more preferably between 10% and 15%, when the user is proximate to the antenna.

The impedance mismatch -at the frequency of radiation or the frequency bandwidth of radiation of the antenna- is less than 30% when the user is proximate to the antenna. With such mismatch, most of the energy of the electrical signals for radiation is radiated by the antenna; that is to say, the presence of the user does not preclude the device from transmitting and receiving data.

In some embodiments, the device is configured such that an impedance mismatch of the antenna decreases when the user is proximate to the antenna. In some of these embodiments, the impedance mismatch is between 0% and 20%, preferably between 0% and 15%, and more preferably between 0% and 10%, when the user is proximate to the antenna.

The device can be configured to feature impedance mismatch -at the frequency of radiation or the frequency bandwidth of radiation of the antenna- when the user is not proximate to the antenna, and become better matched in presence of the user. The active communications can take place even when the user is not proximate to the antenna. Accordingly, when the user is not proximate to the antenna, the impedance mismatch is preferably between 10% and 30%, and preferably between 10% and 20%.

Further, in these embodiments, it can occur that the presence of the user reduces the impedance mismatch to values close to 0%, hence the at least one processor determines that the user is proximate to the antenna by processing a part of electrical signals that is not radiated and is reflected to the directional coupler that is of a magnitude close to zero. This means that fewer non-radiation and reflection is indicative of the user being proximate to the antenna.

In some embodiments, the data of the electrical signals for radiation comprise at least one command for actuation of an electric load.

The actuation of electric loads can be wireless by incorporating the command in the data of the active communications of the device. This means that, when an electric load is to be actuated based on the determination made, the electrical signals with data to be radiated in further -i.e. subsequent- electromagnetic waves include the command in form of data while preferably, at the same time, pulse signals are also radiated in said further electromagnetic waves, thereby further detecting whether an electric load is to be actuated while transmitting an actuation command.

In some embodiments, the at least one processor provides at least one command for actuation of an electric load by providing electrical signals for actuation with the at least one command to a terminal of the device, the terminal being adapted for electrical connection of the electric load.

The at least one processor is preferably coupled with the terminal via an electric load controlling device, e.g. a relay, a transistor, etc., and provides the electrical signals with the at least one command to the electric load controlling device, which in turn provides the actuation electrical signal to the terminal for actuating the electric load connected thereto.

In some embodiments, the device further comprises the electric load.

In some embodiments, the electric load comprises a luminaire. In some embodiments, the electric load comprises one of: an appliance -e.g. a fridge, an oven, an air conditioner, etc.-, an alarm device, a motor, an industrial machine, a controller for any such device or machine, etc.

In some embodiments, the commands for actuation of electric loads comprise one or more of: turning on and off of at least one luminaire; increasing and decreasing dimming of light of at least one luminaire; and changing color of light of at least one luminaire.

A second aspect of the invention relates to a system comprising: one or more devices according to the first aspect of the invention; at least one electric load; at least one antenna; at least one radiofrequency (RF) communications module, each RF communications module being electrically coupled with an antenna of the at least one antenna; and at least one controller, each controller being electrically coupled with one or more electric loads of the at least one electric load, and electrically coupled with an RF communications module of the at least one RF communications module, and each controller being configured to actuate the respective one or more electric loads according to commands for actuating electric loads received from the respective RF communications module.

The at least one electric load is at least operable by means of the one or more devices in a wireless manner. To this end, the at least one electric load is electrically coupled with a controller, in turn electrically coupled with an antenna via an RF communications module. The antenna captures electromagnetic waves which include electrical signals with data at least comprising one or more commands, provides the electrical signals corresponding to the waves to the RF communications module, which in turn provides them or the data thereof to the controller. The controller receives the command or commands for actuation, and operates the at least one electric load according to the command or commands.

A third aspect of the invention relates to a method for actuating at least one electric load, comprising: arranging a device for actuating an electric load, the device comprising: an antenna; a directional coupler; a radiofrequency (RF) communications module electrically coupled with the antenna at least via the directional coupler; and at least one processor electrically coupled with the RF communications module; radiating, by the antenna, electromagnetic waves corresponding to an electrical signal provided by the RF communications module and comprising both data and a pulse signal; receiving, by the directional coupler, a reflected part of the electrical signal from the antenna that has not been radiated by the antenna; providing, by the directional coupler, the reflected part of the electrical signal that has not been radiated to the at least one processor; processing, by the at least one processor, the reflected part of the electrical signal that has not been radiated; determining, by the at least one processor, whether a user is at least proximate to the antenna based on the electrical signal processed -which is the reflected part of the electrical signal that has not been radiated by the antenna-; and providing, by the at least one processor, a command for actuation of electric loads to the at least one electric load based on the determination made.

With the present method, at least one electric load, i.e. electric device, that is either electrically connected to a device or communicatively coupled with the device in a wireless manner can be operated by a user in a touchless manner. In this sense, the user can position herself/himself or an extremity thereof in front of the antenna of the device to actuate the electric load; the user detunes the antenna or, in other words, alters the impedance matching of the antenna and produces, increases or decreases the antenna mismatch.

The mismatch causes that part of the electrical signal to be radiated by the antenna is not radiated, thereby being reflected back to the directional coupler. Since that reflected part of the electrical signal received by the directional coupler has a dependence upon the proximity of the user to the antenna, by providing it to the at least one processor for processing thereof it is determined whether a user is in fact proximate to the antenna for actuating an electric load. The electric load is actuated, either directly or indirectly, by the device. Further, the actuation of the electric load by the user is effected while active communications take place, i.e. whilst the device radiates electromagnetic waves that include data for transmission. The RF communications module provides the electrical signal to the antenna in accordance with the data and pulse signal provided by the at least one processor.

In some embodiments, the processing step comprises obtaining a voltage standing wave ratio, a return loss and/or a reflection coefficient; and wherein the determining step is based on the obtained voltage standing wave ratio, return loss and/or reflection coefficient.

In some embodiments, the processing step comprises processing a plurality of samples of the electrical signal; and wherein the determining step further comprises determining whether a gesture for actuation of electric loads was made by the user.

In some embodiments, the step of providing the command comprises providing the command when it is not determined, in the determining step, that a gesture for actuation of electric loads was made by the user.

In some embodiments, the pulse signal of the electrical signal includes pulses that are provided at a predetermined frequency.

In some embodiments, the step of providing the command comprises including the command in the data of an electrical signal to be radiated by the antenna.

In some embodiments, the step of providing the command comprises providing an electrical signal with the command to the electric load, and the method further comprising electrically connecting the electric load to the device.

In some embodiments, the antenna and the RF communications module are both configured such that the reflected part of the electrical signal to be processed is indicative of a user being proximate to the antenna when the user is at a distance not greater than 5 cm from the antenna.

In some embodiments, the step of providing the command comprises providing the command when it is not determined, in the determining step, that the user is at a distance from the antenna that is equal to or less than a predetermined distance, the predetermined distance preferably being between 0,5 cm or 1 cm.

In some embodiments, the device is configured such that an impedance mismatch of the antenna increases when the user is proximate to the antenna. In some of these embodiments, the impedance mismatch is between 10% and 30%, preferably between 10% and 20%, and more preferably between 10% and 15%, when the user is proximate to the antenna.

In some embodiments, the device is configured such that an impedance mismatch of the antenna decreases when the user is proximate to the antenna. In some of these embodiments, the impedance mismatch is between 0% and 20%, preferably between 0% and 15%, and more preferably between 0% and 10%, when the user is proximate to the antenna.

In some embodiments, the electric load comprises a luminaire. In some embodiments, the electric load comprises one of: an appliance, an alarm device, a motor, an industrial machine, a controller for any such device or machine, etc.

In some embodiments, the commands for actuation of electric loads comprise one or more of: turning on and off of at least one luminaire; increasing and decreasing dimming of light of at least one luminaire; and changing color of light of at least one luminaire.

A fourth aspect of the invention relates to a data processing apparatus comprising means for carrying out the steps of a method according to the third aspect of the invention.

Similar advantages as those described for the first aspect of the invention can also apply to the third and fourth aspects of the invention.

### BRIEF DESCRIPTION OF THE DRAWINGS

To complete the description and in order to provide for a better understanding of the invention, a set of drawings is provided. Said drawings form an integral part of the description and illustrate embodiments of the invention, which should not be interpreted as restricting the scope of the invention, but just as examples of how the invention can be carried out. The drawings comprise the following figures:
Figure 1 shows, in block diagram form, a device in accordance with embodiments.
Figure 2 shows a flowchart illustrating a process on how to determine whether a user is proximate to the antenna and/or whether gestures have been made in accordance with embodiments.
Figure 3 shows a graph with exemplary electrical signals provided by a directional coupler of devices in accordance with embodiments.

### DESCRIPTION OF WAYS OF CARRYING OUT THE INVENTION

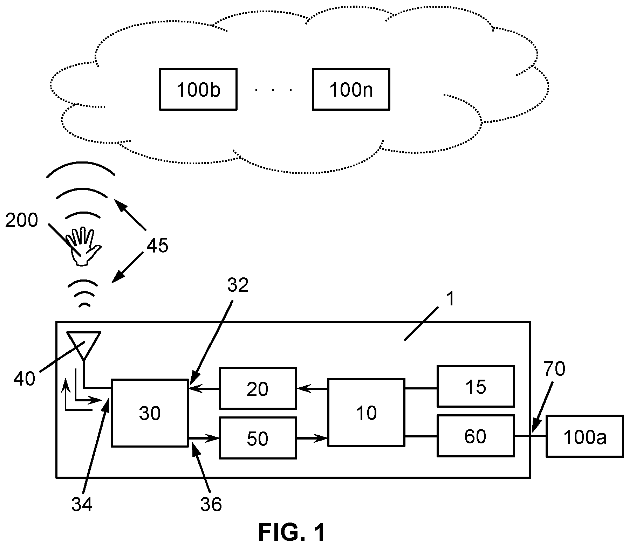

Figure 1 shows, in block diagram form, a device 1 in accordance with embodiments. The device 1 functions as a human-to-machine touchless synthetic interface for electric loads 100a-100n.

The device 1 comprises one or more processors 10 with at least one memory 15 electrically coupled thereto for storing instructions and computer programs to be executed by the processor(s) 10. The device 1 comprises a communications module 20 for communications via radiofrequency, e.g. a modem, a directional coupler 30, and an antenna 40. The directional coupler 30 is electrically coupled with both the antenna 40 and the communications module 20, whereas the one or more processors 10 are electrically coupled with the communications module 20 for commanding through it the radiation of electromagnetic waves by the antenna 40.

Although not illustrated, in some embodiments the device comprises electronics arranged between the antenna 40 and the communications module 20. Said electronics are for the matching of impedances and the adaptation of signals for radiation as known in the art of radio frequency communications, e.g. matching networks, an RF power amplifier, and may be integrated in the communications module 20 or be separate from the communications module 20 and arranged between the module 20 and the antenna 40. Likewise, electronics may be provided for adaptation of signals after capturing electromagnetic waves with the antenna 40.

The device 1 further comprises a converting device 50 for converting an analog signal to digital. In this example, the converting device 50 is arranged between the directional coupler 30 and the one or more processors 10, whereas in other examples the converting device 50 can be integrated with the directional coupler 30 or with the one or more processors 10 -like when processor(s) 10 and memory 15 are embodied in a microcontroller. The device 1 may also comprise an electric load controlling device 60 electrically connected to the one or more processors 10 and a terminal 70 of the device 1 for electrical connection of an electric load 100a.

The one or more processors 10 provides data to be communicated to electronic apparatuses remote from the device 1 in a wireless manner, and a repeating pulse signal that enables a user 200 to control an electric load 100a-100n without touching the device 1. Both the data and the repeating pulse signal are provided to the communications module 20, which in turn provide an electrical signal for radiation with both the data and pulses of the pulse signal.

The electrical signal for radiation is produced such that the data of the active communications use either a well-established wireless communications protocol or standard (e.g. WLAN, Bluetooth, Zigbee, Zwave, GSM, UMTS, LTE, etc.) or a custom wireless communications protocol. Likewise, pulses of the pulse signal are included in the electrical signal between some -or all- pairs of consecutive frames of data. The radiation of the pulse signal is in the same frequency bandwidth of the active communications, but it can alternatively be in a frequency bandwidth of the electromagnetic spectrum different from that of the active communications. The directional coupler 30 receives, at a first port 32, the signal from the communications module 20 and provides it, through a second port 34, to the antenna 40 for radiation in the form of electromagnetic waves 45.

Whilst the user 200 is proximate to the antenna 40, e.g. at a distance of 5 cm or less, the impedance mismatch of the antenna 40 is such that part of the electrical signals for radiation cannot be radiated and get reflected back to the directional coupler 30. In some embodiments, the closer the user 200 is to the antenna 40, the greater the mismatch of the antenna 40 -and, thus, the power reflection- becomes whereas, in some other embodiments, the closer the user 200 is to the antenna 40, the lower the mismatch of the antenna 40 becomes.

The reflected part of the electrical signals received at the second port 34 of the coupler 30 is provided to a third port 36. The directional coupler 30 comprises or has a rectifier circuit connected at the third port 36, for example a diode or another semiconductor p-n junction component, with which the reflected power that arrives at the second port 34 and is provided to the third port 36 can be processed for calculation of e.g. the VSWR. In this sense, the part of the electrical signal reflected back and output through the third port 36 is converted to DC by the rectifier circuit.

From these electrical signals, a VSWR, return losses and/or a reflection coefficient can be obtained. Digitized versions of the electrical signals of the third port 36 are provided to the one or more processors 10 for processing.

The electrical signal at the output of the rectifier circuit is processed so as to retrieve the pulse signal, for example with an analogue or digital filter. As it is known in the art, in order to perform this filtering so that the pulse signal is retrieved precisely, the time duration and the frequency of the pulses of the pulse signals are preferably selected based on the wireless communications protocol or standard used -in the active communications where the pulse signal is included- so that they have some differences according to which the filtering can be performed. In one example, a capacitor can be arranged for such filtering. In another example, the at least one processor applies a digital filter to the digitized electrical signal.

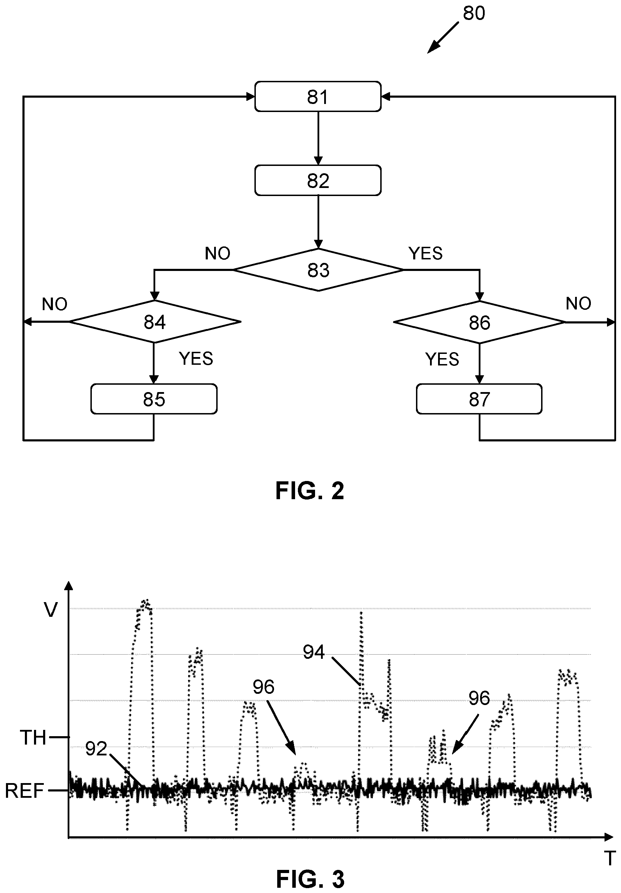

Then, by processing the pulse signal and the characteristics thereof, the one or more processors 10 establish the impedance mismatch in the antenna 40 and determines whether such impedance mismatch is due to the presence of a user 200 or not. Accordingly, as shown in Figure 3, a baseline for having a reference impedance mismatch, in terms of e.g. VSWR, is first obtained so that one or more thresholds can be set for the processor(s) 10 to determine whether the user 200 is in fact proximate to the antenna 40. The processor(s) 10 provide a command for actuation of at least one electric load 100a-100n in accordance with said determination, thus in accordance with the impedance mismatch. Likewise, the determination made by the processor(s) 10 may include determining whether any specific gesture has been made by the user 200, which may convey one actuation of the electric load 100-100n or another, or no actuation at all.

The processor(s) 10 provide the command in form of electrical signal to the electric load controlling device 60, which in turn provides the actuating signal to the terminal 70 where an electric load 100a connects, and/or provides the command in form of electromagnetic waves 45 to a remote electric load 100b-100n not electrically connected to the device 1. Such command may be included in the active communications, thus the data to be transmitted comprises the command.

The active communications can take place between the device 1 and other electric loads that are or are not to be actuated. By way of example, the device 1 transmits data to and, optionally, receives data from the electric load 100b-100n yet it is an electric load that it cannot operate, for instance a mobile phone; occasionally the device 1 may wirelessly communicate with other electric loads, including electric loads to which it provides commands for actuation thereof. Preferably, the antenna 40 radiates the electromagnetic waves 45, which include the active communications and the pulse signals, with a radiation power below a maximum radiation power that preferably complies with SAR regulations. Accordingly, irrespective of the presence of the user 200 in the proximity of the antenna 40, the device 1 complies with SAR regulations at all times and there is no radiation hazard for the user 200.

Although not illustrated, the device 1 preferably also comprises one or more attaching devices -e.g. adhesive, screws, etc.- for attachment of the device 1 to a surface, e.g. a wall. In this way, the device 1 can be fixedly attached and remain static so that a person can use it like a touchless switch.

Figure 2 shows a flowchart illustrating a process 80 on how to determine whether a user is proximate to the antenna and/or whether gestures have been made in accordance with embodiments. The process 80 likewise performs dynamic adjustment of a baseline for making the aforesaid determinations.

Pulses are included 81 in an electrical signal for radiation, which includes data for transmission.

The reflected part of the electrical signal for radiation is received by a directional coupler, and provided to at least one processor. The at least one processor, in turn, processes 82 said reflected part so as to establish the impedance mismatch of the antenna -based on the pulses that were included 81 in the electrical signal for radiation- and whether a user is proximate to the antenna and, in some embodiments, even whether a gesture has been made by the user while being proximate to the antenna.

In block 83 it is checked, by the at least one processor, whether in immediately previous processing 82 of reflected part of the electrical signal for radiation -i.e. in previous samples of the part of the electrical signal for radiation- it has been determined that a person may have been proximate to the antenna.

When it has been determined that no person was proximate to the antenna in previous samples, the process 80 checks in block 84 whether the currently processed 82 samples are stable, that is, variation of the amplitudes thereof is below a predetermined amplitude threshold. Positive determination that the samples are stable results in the setting 85 of those samples as a baseline for posterior determinations of whether there is a user proximate to the antenna or gestures are made; the process 80 is then repeated for continuously checking whether an electric load is to be actuated. Negative determination that the samples are stable results in the at least one processor not taking any action and waiting for subsequent iterations of the process 80.

Alternatively, at block 83, when it has been determined that a person was proximate to the antenna in previous samples, it is determined 86 whether according to the current samples under processing 82 there is a user proximate to the antenna too, and/or whether a gesture has been made. To this end, the at least one processor takes into account the amplitude values of the currently processed samples and, optionally, the time evolution of the amplitude of the currently processed samples and the immediately previous samples. Positive determination of the presence of the user in proximity to the antenna or the existence of a gesture made by the user results in the provision 87 of a command for actuating an electric load, be it by way of an electrical signal to an electric load electrically connected to the device or by way of commands included in subsequent data frames included in electrical signal for radiation; an exemplary positive determination is explained next with reference to Figure 3. If the determination is negative, no action is taken by the at least one processor. With both positive and negative determinations, the process 80 keeps being repeated for the actuation of electric loads whenever a user gets proximate to the antenna and/or makes a gesture.

Both the adjustment of the baseline by setting 85 the samples as part of the new baseline, and the requirement that a determination that the user is proximate -or a gesture has been made- in a plurality of samples -blocks 83 and 86- for actuating a load can reduce false positives. In some embodiments, the adjustment and/or the requirement are/is not part of the process.

Figure 3 shows a graph with exemplary electrical signals 92, 94 provided by a directional coupler of devices in accordance with embodiments, particularly the electrical signals corresponding to the part of the electrical signals provided by an RF communications module that end up not being radiated owing to antenna mismatch. The graph shows voltage, V, of the electrical signals 92, 94 over time, T. The electrical signals 92, 94 are representative impedance mismatch of the antenna by being measurements of the VSWR, the return losses or the reflection coefficient. For the sake of simplicity only, both the first and second electrical signals 92, 94 have been represented in a single graph, however it will be readily apparent that no such two signals 92, 94 can be present at once since only a single electric signal is provided to the antenna at a time and a part thereof is reflected to the directional coupler; or, in other words, the first and second electrical signals 92, 94 have been measured in different time intervals although being represented as if overlapped in time.

A first electrical signal 92 acts as a baseline to set a reference REF of electrical signal reflected back due to inherent impedance mismatch of the antenna of a device according to the present disclosure. This means that no person or object is in the proximity of the antenna when the first electrical signal 92 -corresponding to non-radiated electrical signal- arrives at the port of the directional coupler electrically coupled to the antenna.

The baseline can also be dynamically set so as to account for changes in the environment that influence the mismatch of the antenna even without the presence of the user, for example due to electromagnetic disturbances. When there are such changes in the environment, taking as example the first electrical signal 92, the amplitude of said signal changes over time as more or less electrical signal gets reflected from the antenna towards the directional coupler. Dynamic adjustments of the baseline can be made in accordance with the process of the flowchart of Figure 2, in particular the branch of blocks 83-85 makes possible to change the baseline to account for environment changes.

A second electrical signal 94 shows the level of signal at the same port when a user intermittently gets close to the antenna, i.e. moves towards the antenna and then moves away from the antenna several times. As it can be seen, the amplitude of the second electrical signal 94 is at the REF level most of the time, yet when the user gets close to the antenna the amplitude increases, which means that the mismatch of the antenna increases and a greater amount of electrical signal gets reflected back towards the directional coupler.

A threshold TH level can be set based on the amplitudes of the second electrical signal 94, taking into account the REF level, so that processor(s) of the device determine that a user is proximate to the antenna when the electrical signal reflected to the directional coupler exceeds the threshold TH level. For the TH level shown, two level increases 96 in the electrical signal 94 would result in the determination that the user is not proximate to the antenna because their amplitude is less than TH.

Further, even though a single threshold TH level has been shown, it will be noted that several threshold levels can be set. With a single threshold TH level or multiple threshold levels it is possible to define patterns for determining that a user has made a certain gesture, for example when the time evolution of the electrical signal exceeds or does not exceed one or several threshold levels following a specific time sequence. The progressive increase or reduction in the amplitude of the signal over time is also indicative of the time evolution of the proximity of the user or an extremity thereof to the antenna, which in turn can also be processed for deriving the command to be provided to the electric load. Likewise, prolonged times with an amplitude exceeding a threshold, not exceeding a threshold, or being within an interval of two threshold levels can also be used for setting gesture patterns.

By way of example, electrical signal with a progressive increase in amplitude and a progressive reduction in amplitude can be mapped to increase and reduction in the light intensity of a luminaire -in those embodiments in which the electric load is a luminaire or a controller thereof-, respectively; and peaks in amplitude exceeding a predetermined threshold and short in time can be mapped to turning on and off an electric load. These and/or other time/amplitude sequences can be mapped to other commands as well, also taking into account the type of electric load to actuate on. As will be apparent, commands such as turning on and off can be mapped to two different sequences, or to a same sequence; in the latter case, the command can comprise an invert enable operation, or a turning on or off operation based on a last status of the electric load being actuated on that is stored in a memory of the device.

Lastly, similar techniques can be used to consider certain apparent proximity detections -with increased amplitudes of electrical signals- to be false positives. For example, a user walking by in front of the device with no intention to actuate an electric load. An increase in amplitude with very short duration in time, or a constant increased level may be respectively indicative of a person passing by proximate to the device or a person not realizing that she/he is next to the device.

The graph of Figure 3 shows electrical signals as analog signals for the sake of the explanation only. It will be understood that the processor(s) of a device according to the present disclosure processes digitized version -provided by a converting device, such as converting device 50 of Figure 1- of the signals, thus discrete samples thereof. It will be readily apparent that the sampling frequency in the digitization can be adjusted for more precise determination of the time evolution of the mismatch of the antenna and, thus, of the proximity of the user and the gestures made by she/he.

The example of Figure 3 corresponds to embodiments in which an impedance mismatch of the antenna of a device increases -i.e. becomes worse- when a user gets close to antenna, that is to say, the presence of the user detunes the antenna at the frequency or frequency bandwidth of radiation of the electromagnetic waves. In other embodiments, the impedance mismatch of the antenna of a device decreases when a user gets close to antenna, that is to say, the presence of the user tunes the antenna at the frequency or frequency bandwidth of radiation of the electromagnetic waves. In such other embodiments, the second electrical signal 94 is to be below the first electrical signal 92 owing to less non-radiation and reflection of electrical signals delivered to the antenna for radiation; likewise, the second electrical signal 94 may not have to exceed one or more thresholds to determine that the user is proximate to the antenna or that a gesture was made.

In this text, the term "comprises" and its derivations (such as "comprising", etc.) should not be understood in an excluding sense, that is, these terms should not be interpreted as excluding the possibility that what is described and defined may include further elements, steps, etc.

On the other hand, the invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

## Claims

1. A device (1) for actuating an electric load (100a-100n), comprising:
an antenna (40);
a radiofrequency, RF, communications module (20) electrically coupled with the antenna (40);
at least one processor (10) electrically coupled with the RF communications module (20), the at least one processor (10) being configured to provide electrical signals with data; and
a directional coupler (30) at least via which the RF communications module (20) is coupled with the antenna (40);
**characterized in that**
the at least one processor (10) and the RF communications module (20) are both configured to provide electrical signals for radiation to the antenna (40), the electrical signals for radiation comprising both the data and pulse signals;
the at least one processor (10) is further configured to:
at least determine whether a user (200) is proximate to the antenna (40) by processing part of the electrical signals (92, 94) for radiation that are not radiated by the antenna (40) and are reflected to the directional coupler (30); and
provide a command for actuation of at least one electric load based on the determination made.

2. The device (1) of claim 1, wherein the at least one processor (10) processes the part of the electrical signals (92, 94) not radiated and reflected to obtain a voltage standing wave ratio, a return loss and/or reflection coefficient at least for determining whether a user is proximate to the antenna (40).

3. The device (1) of any one of the preceding claims, wherein the at least one processor (10) processes a plurality of samples of the part of the electrical signals (92, 94) not radiated and reflected to determine whether both a user (200) is proximate to the antenna (40) and a gesture for actuation of electric loads was made by the user (200).

4. The device (1) of claim 3, wherein the at least one processor (40) is further configured to not provide a command for actuation when it determines that no gesture for actuation was made by the user (200).

5. The device (1) of any of the preceding claims, wherein the pulse signals of the electrical signals for radiation include pulses at a predetermined frequency.

6. The device (1) of any one of the preceding claims, wherein the antenna and the RF communications module are both configured such that the part of the electrical signals (92, 94) not radiated and reflected is indicative of a user (200) being proximate to the antenna (40) when the user (200) is at a distance not greater than 5 centimeters from the antenna (40).

7. The device (1) of any one of the preceding claims, wherein:
the data of the electrical signals for radiation comprise at least one command for actuation of an electric load; and/or
the at least one processor (10) provides at least one command for actuation of an electric load by providing electrical signals for actuation with the at least one command to a terminal (70) of the device (1), the terminal (70) being adapted for electrical connection of the electric load (100a-100n).

8. The device (1) of any one of the preceding claims, further comprising the electric load (100a-100n), the electric load preferably comprising a luminaire.

9. A system comprising:
at least one device (1) according to any one of the preceding claims;
at least one electric load (100a-100n);
at least one antenna;
at least one radiofrequency, RF, communications module, each RF communications module being electrically coupled with an antenna of the at least one antenna; and
at least one controller, each controller being electrically coupled with one or more electric loads of the at least one electric load, and electrically coupled with an RF communications module of the at least one RF communications module, and each controller being configured to actuate the respective one or more electric loads according to commands for actuating electric loads received from the respective RF communications module.

10. A method for actuating at least one electric load (100a-100n), comprising:
arranging a device (1) for actuating an electric load (100a-100n), the device (1) comprising: an antenna (40); a directional coupler (30); a radiofrequency, RF, communications module (20) electrically coupled with the antenna (40) at least via the directional coupler (30); and at least one processor (10) electrically coupled with the RF communications module (20);
**characterized by**
radiating, by the antenna (40), electromagnetic waves (45) corresponding to an electrical signal provided by the RF communications module (20) and comprising both data and a pulse signal;
receiving, by the directional coupler (30), a reflected part of the electrical signal from the antenna (40) that has not been radiated by the antenna (40);
providing, by the directional coupler (30), the reflected part of the electrical signal that has not been radiated to the at least one processor (10);
processing, by the at least one processor (10), the reflected part of the electrical signal (92, 94) that has not been radiated;
determining, by the at least one processor (10), whether a user (200) is at least proximate to the antenna (40) based on the electrical signal (92, 94) processed; and
providing, by the at least one processor (10), a command for actuation of electric loads to the at least one electric load (100a-100n) based on the determination made.

11. The method of claim 10, wherein the processing step comprises obtaining a voltage standing wave ratio, a return loss and/or reflection coefficient; and wherein the determining step is based on the obtained voltage standing wave ratio, return loss and/or reflection coefficient.

12. The method of any one of claims 10-11, wherein the processing step comprises processing a plurality of samples of the electrical signal (92, 94); and wherein the determining step further comprises determining whether a gesture for actuation of electric loads was made by the user (200).

13. The method of any one of claims 10-12, wherein the step of providing the command comprises:
including the command in the data of an electrical signal to be radiated by the antenna (40); and/or
providing an electrical signal with the command to the electric load (100a-100n), the method further comprising electrically connecting the electric load (100a-100n) to the device (1).

14. The method of any one of claims 10-13, wherein the antenna (40) and the RF communications module (20) are configured such that the reflected part of the electrical signal (92, 94) to be processed is indicative of a user (200) being proximate to the antenna (40) when the user (200) is at a distance not greater than 5 centimeters from the antenna (40).

15. The method of any one of claims 10-14, the device (1) of any one of claims 1-8, or the system of claim 9, wherein the electric load (100a-100n) comprises a luminaire, and wherein commands for actuation of electric loads comprise one or more of: turning on and off of at least one luminaire; increasing and decreasing dimming of light of at least one luminaire; and changing color of light of at least one luminaire.
